Europäisches Patentamt

European Patent Office

Office européen des brevets

(11) Veröffentlichungsnummer: **0 061 722**

A2

(12) **EUROPÄISCHE PATENTANMELDUNG**

(21) Anmeldenummer: 82102479.1

(22) Anmeldetag: 25.03.82

(51) Int. Cl.³: **G 07 F 7/02**
**G 06 K 19/08**

(30) Priorität: 31.03.81 DE 3112664

(43) Veröffentlichungstag der Anmeldung:
06.10.82 Patentblatt 82/40

(84) Benannte Vertragsstaaten:
CH DE FR GB LI

(71) Anmelder: J. Hengstler K.G.
Uhlandstrasse 49
D-7209 Aldingen - 1(DE)

(72) Erfinder: Pfeiffer, Horst
Königsbergerweg 10
D-7209 Aldingen 1(DE)

(74) Vertreter: Hubbuch, Helmut Dipl.-Ing et al,
Patentanwälte Dr. Rudolf Bauer Dipl.-Ing. Helmut
Hubbuch Dipl.-Phys. Ulrich Twelmeier Westliche
Karl-Friedrich-Strasse 29-31
D-7530 Pforzheim(DE)

(54) Einrichtung zur Abbuchung bei Guthabenkarten.

(57) Die Erfindung betrifft eine Einrichtung zur Abbuchung bei Guthabenkarten mit metallisierter Oberfläche zur Elektro-sensitiv-Beschriftung.

Aufgabe der Erfindung is es nun eine Einrichtung zur Abbuchung von Werteinheiten auf einer Guthabenkarte zu schaffen, welche bei Inanspruchnahme von Dienstleistungen oder bei Warenentnahme beispielsweise Kopien an Kopierautomaten ermöglicht, daß deren Verrechnung automatisiert werden kann.

Die Einrichtung zur Abbuchung bei Guthabenkarten mit metallisierter Oberfläche zur Elektrosensitiv-Beschriftung nach der Erfindung kennzeichnet sich hierzu dadurch, daß die Guthabenkarte im elektrosensitiven Schreibverfahren in elektrisch leitende Flächenbereiche durch nichtleitende Abgrenzungen unterteilt ist und einerseits einen Codierbereich, insbesondere im Randteil und andererseits einen Guthabenbereich im Grundkontaktfeld zur schrittweisen, sichtbaren Abbuchung durch elektrosensitive Einwirkung aufweist.

Fig. 2

- 1 -

## Einrichtung zur Abbuchung bei Guthabenkarten

Die Erfindung bezieht sich auf eine Einrichtung zur Abbuchung bei Guthabenkarten mit metallisierter Oberfläche zur Elektrosensitiv-Beschriftung.

Bekannt sind Wert- und/oder Guthabenkarten, welche Magnetstreifen enthalten und in Schreib- und Lesegeräten Restguthaben feststellen, Abbuchungen vornehmen und das um den abgebuchten Wert verringerte Restguthaben wieder einschreiben. Oft enthalten solche bekannten Guthabenkarten auch Markierungen, welche den noch vorhandenen Guthabenrest für den Benutzer visuell lesbar zeigen. Nachteilig sind bei diesen Einrichtungen, daß sehr teure und technisch schwierige und verschiedenartige Verfahren notwendig sind, um alle Forderungen wie Restwerterkennung, Codeerkennung, Abbuchung und für den Benutzer sichtbare Anzeige sicherzustellen.

Aufgabe der Erfindung ist es nun eine Einrichtung zur Abbuchung von Werteinheiten auf einer Guthabenkarte zu schaffen, welche bei Inanspruchnahme von Dienstleistungen oder bei Warenentnahme beispielsweise Kopien an Kopierautomaten ermöglicht, daß deren Verrechnung automatisiert werden kann. Hierbei ist mit möglichst geringem Aufwand und bei geringen Kosten für die Einrichtung und dem Datenträger eine

- 2 -

automatisierte Abbuchung zu realisieren. Die dafür geeigneten Anwendungen sind demnach auch Vorgänge, die einen verhältnismäßig geringen Wert enthalten, bei dem sich bekannte und wesentlich teure Einrichtungen oder Verfahren allein aus Kostengründen nicht anwenden lassen.

Die Einrichtung zur Abbuchung bei Guthabenkarten mit metallisierter Oberfläche zur Elektrosensitiv-Beschriftung nach der Erfindung kennzeichnet sich hierzu dadurch, daß die Guthabenkarte im elektrosensitiven Schreibverfahren in elektrisch leitende Flächenbereiche durch nichtleitende Abgrenzungen unterteilt ist und einerseits einen Codierbereich, insbesondere im Randteil und andererseits einen Guthabenbereich im Grundkontaktfeld zur schrittweisen, sichtbaren Abbuchung durch elektrosensitive Einwirkung aufweist. Durch die erfindungsgemäße Ausführung werden mit minimalem Aufwand die eingangs geschilderten Forderungen erfüllt durch ein Funktionsprinzip in elektrosensitivem Schreibverfahren und dadurch kostengünstigen Ausführung von Datenträgern als Guthabenkarte mit Entwerte- und Erstellungsgerät.

Der Guthabenkarte ist somit zugeordnet ein Elektrosensitiv-Schreibgerät zur Erstellung derselben mit Grundcodierung im Randteil und Guthabenbereich im weiteren Kartenteil zur elektrosensitiven Abbuchung und ein Elektrosensitiv-Entwertungsgerät mit Kontakt-

- 3 -

anordnung zur Erkennung der Codierung im Randteil
mit Auswertung und Freigabe und abhängig von
einer Benutzung entsprechenden elektrosensitiven
Entwertung im Guthabenbereich der Guthabenkarten.

Weitere Einzelheiten der Einrichtung gemäß der Erfindung sind an Hand bevorzugter Ausführungsbeispiele in der Zeichnung dargestellt und nachfolgend beschrieben und zwar zeigen:

Figur 1 eine Guthabenkarte gemäß der Erfindung,
Figur 2 eine Guthabenkarte in doppelseitiger Ausführung,
Figur 3 die Draufsicht eines zugehörigen Entwertungsgerät aufgeschnitten,
Figur 4 den Längsschnitt durch das Entwertungsgerät,
Figur 5 den Querschnitt durch das Entwertungsgerät,
Figur 6 eine Einzelheit der Elektrodenanordnung,
Figur 7 eine weitere Ausführung einer Guthabenkarte
        mit höherer Kapazität,
Figur 8 die Draufsicht eines zugehörigen Erstellungsgeräts für Guthabenkarten,
Figur 9 den Längsschnitt durch das Erstellungsgerät
        und
Figur 10 eine Schemaskizze zum Funktionsablauf beim
        Entwerten einer Guthabenkarte.

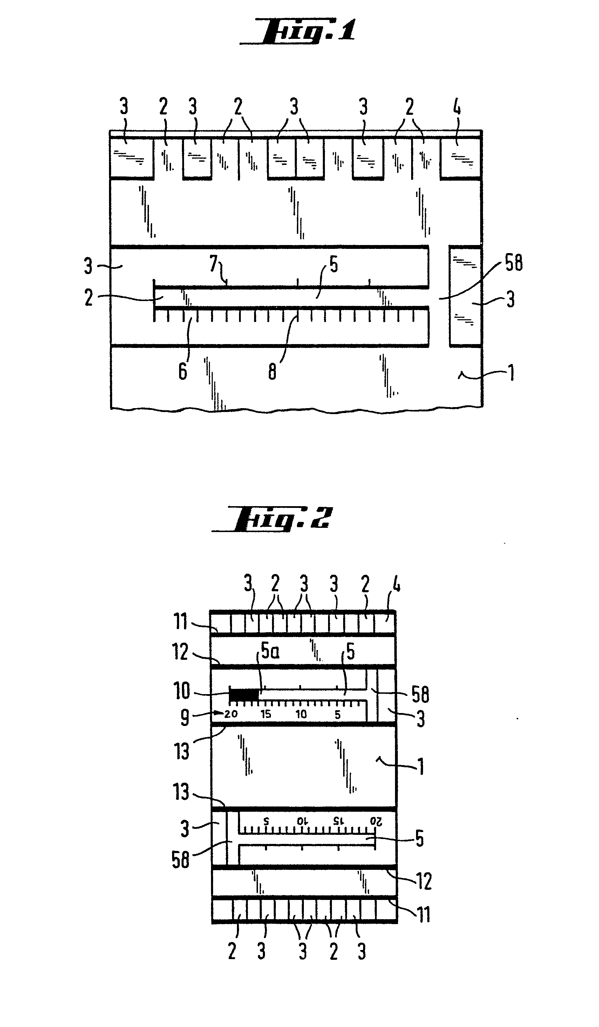

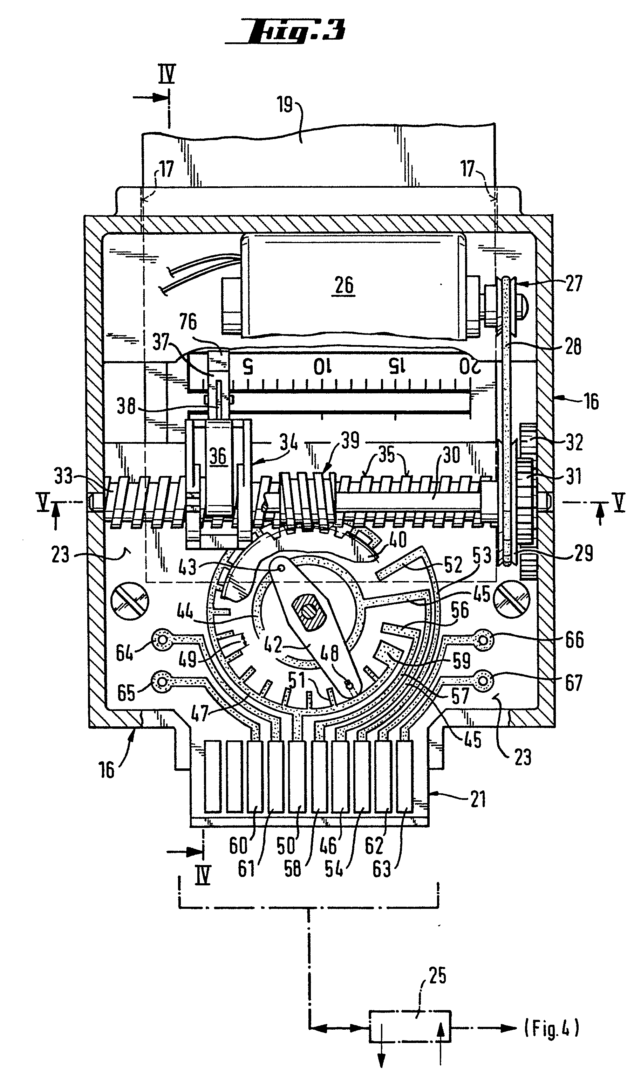

In Figur 1 der Zeichnung ist schematisch eine erfindungsgemäß ausgebildete Guthabenkarte dargestellt,
deren Oberfläche 1 metallisiert ist und einem Aus-

— 4 —

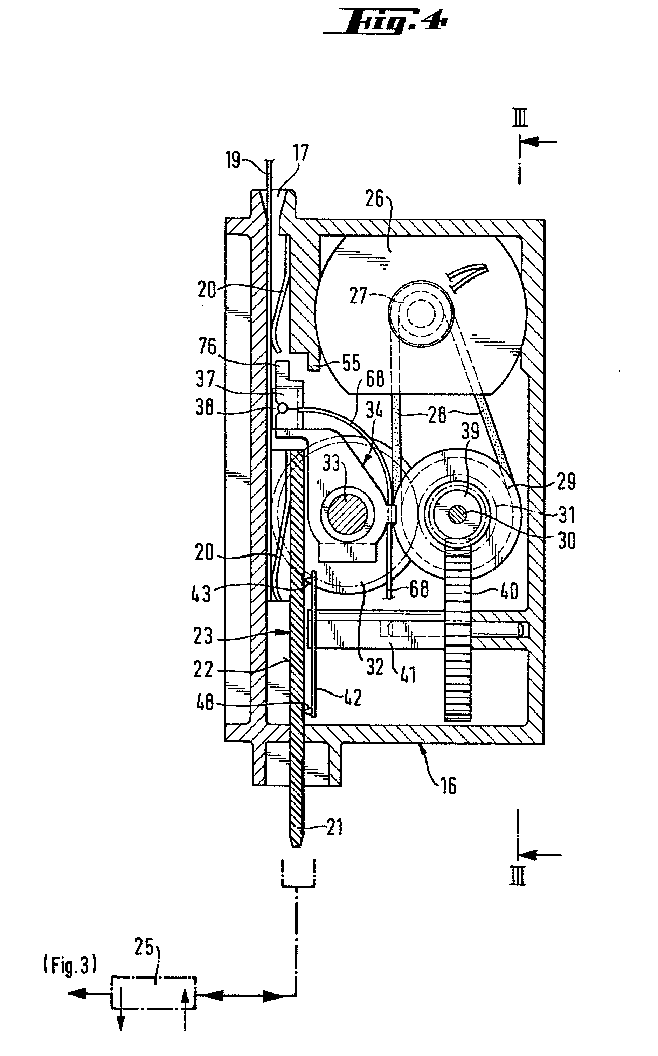

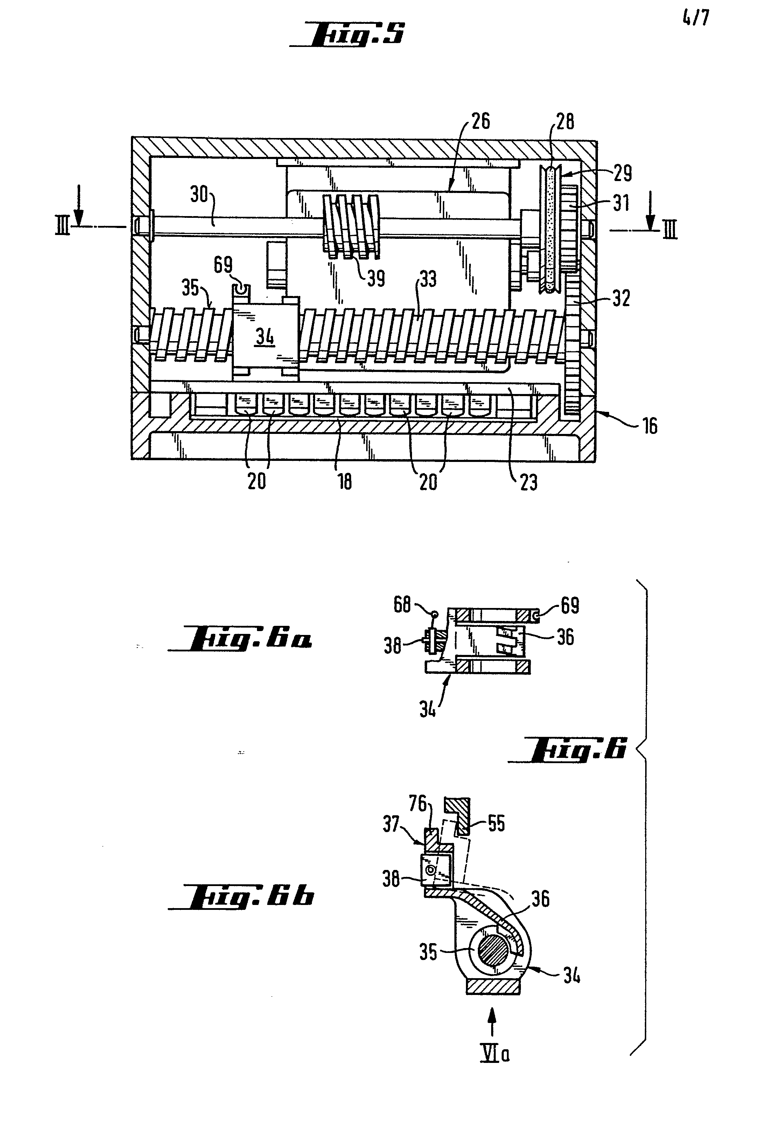

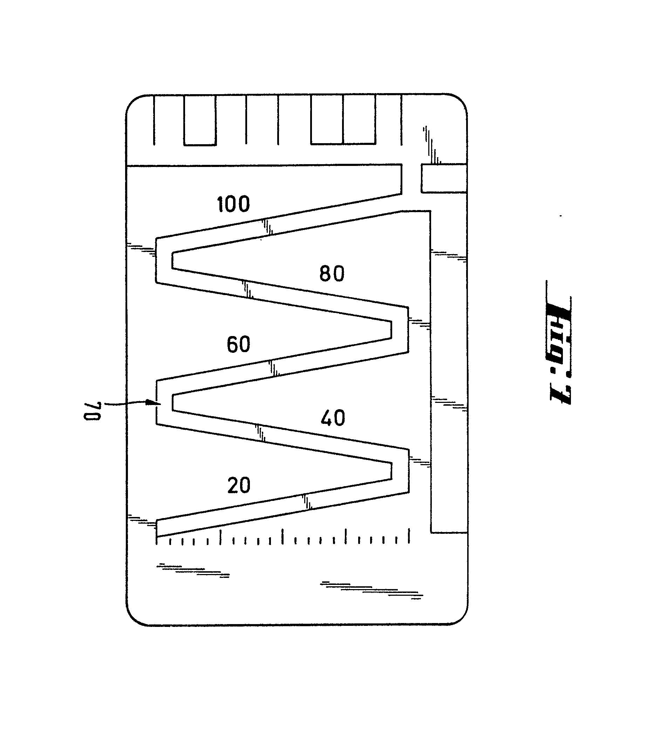

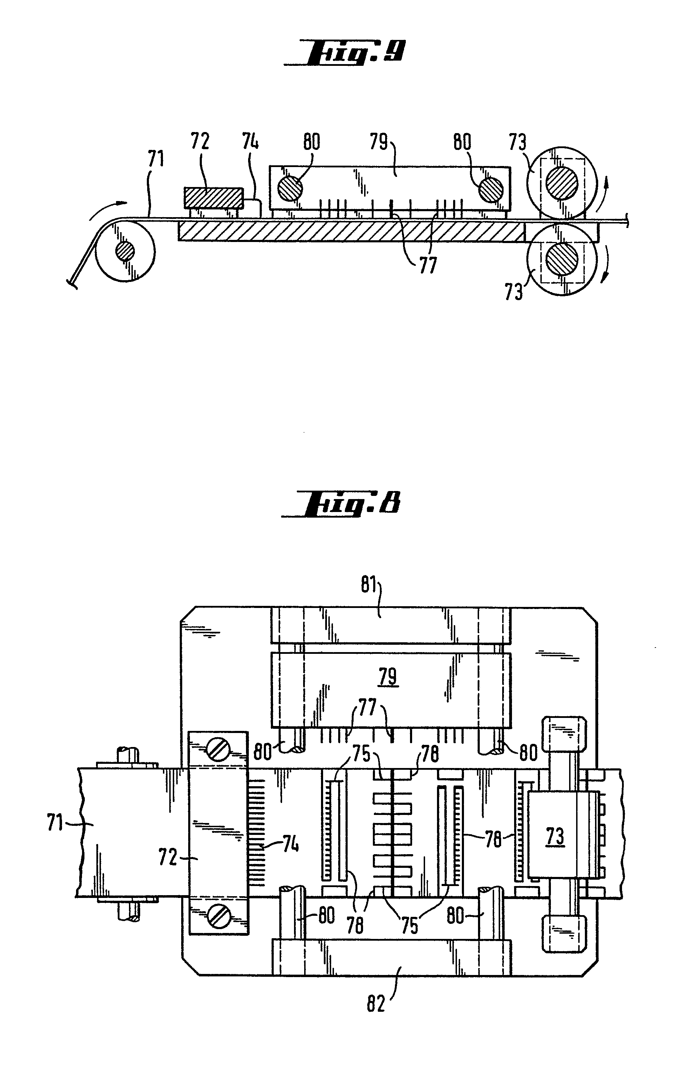

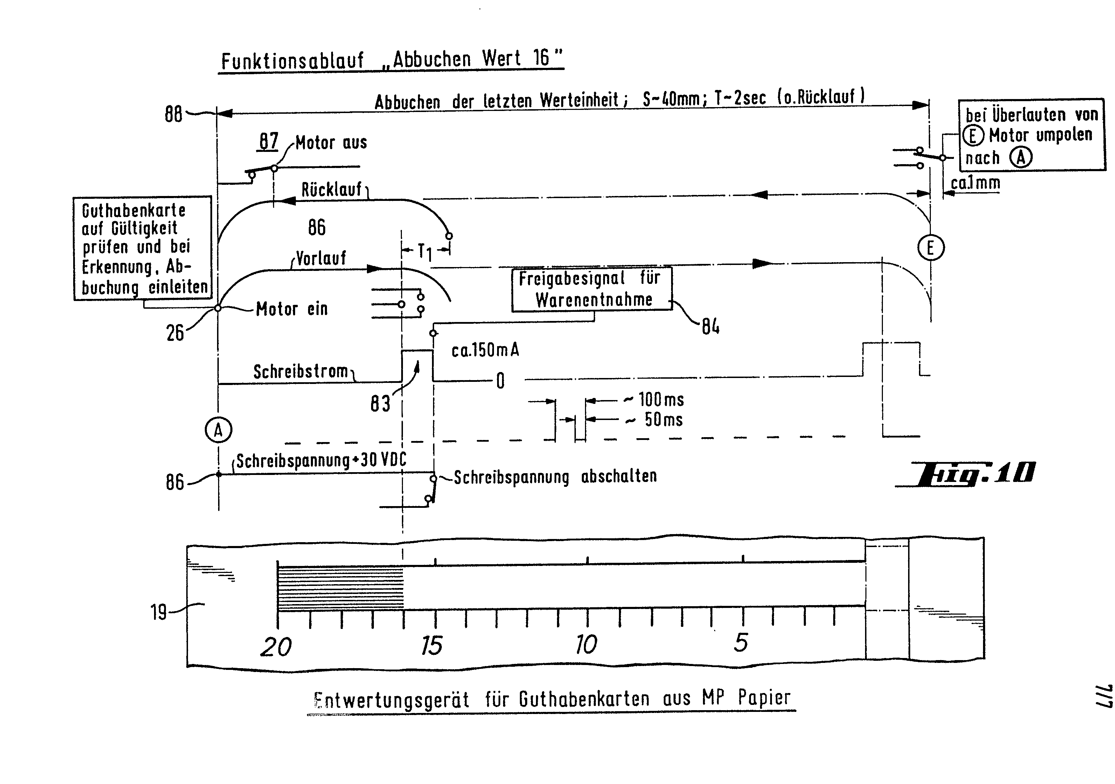

führungsbeispiel entsprechend in elektrosensitiver Schreibweise in elektrisch leitende 2 und nicht leitende 3 Flächenbereiche aufgeteilt ist, welche einen Kodierbereich 4 und einen Guthabenbereich 5 bilden. Während der Kodierbereich 4 in entsprechende durch elektrosensitives Abtrennen einer Auswahl einzelner Flächenbereiche 2 und 3 der elektrisch lesbaren Erkennung der Guthabenkarte dient, ist der Guthabenbereich 5 in Verbindung mit einem nachstehend näher beschriebenen Entwertegerät entspr. Figur 3 bis 5 abschnittweise bei 6 beginnend entwertbar und die Abschnitte durch Skalenaufdruck 7 und 8 bezeichnet.

Wie nach Figur 2 ersichtlich, erleichtern die in einem Druckvorgang mit Ziffern 9 versehenen Skala 7 und 8 die Ablesung des bereits verbrauchten Guthabens 10 anhand des für den Benutzer sichtbar abgebrannte Guthabenbereich 5. Mit dem Aufdruck der Ziffern 9 und weiterer Beschriftung der Guthabenkarte, werden gleichzeitig die Trenn- und Verbindungsstellen zwischen den einzelnen elektrisch getrennten Kodier- und Guthabenbereichen durch Balken 11, 12 und 13 überdruckt um diese gegen offensichtliches Erkennen zu überdecken.

Nachdem in der Darstellung nach Figur 1 die Guthabenkapazität auf nur beispielsweise 20 Werteinheiten beschränkt ist, wird bei beidseitiger Anordnung entsprechend Figur 2 doppelte und bei metallisierter Beschichtung auch auf der Rückseite vierfache Kapa-

- 5 -

zität erreicht. Zur Anwendung bzw. zur Abbuchung oder schrittweisen Entwertung des Guthabenbereichs 5 dient ein Gerät wie in den Figuren 3 bis 5 näher erläutert, bestehend aus einem Gestell 16 mit einem Einsteckschlitz 17 und einer Führung 18 zur Aufnahme der Guthabenkarte 19. Bei vollständig eingesteckter Guthabenkarte 19 kommt deren Kodierfeld 4 in Kontakt mit einer Reihe Kontaktfedern 20. Die über diese Kontaktfedern 20 festgestellte Kodierung wird über Steckanschlüsse 21 auf der nicht dargestellten Seite 22 der gedruckten Schaltungsplatte 23 an eine Auswerteschaltung weitergeleitet. Ist die Kodierung richtig, wird die Guthabenkarte 19 akzeptiert und durch eine hier nicht besonders dargestellte Steuerung 25 die Abbuchung ausgelöst. Diese Steuerung 25 setzt dazu den Motor 26 im Uhrzeigersinn in Betrieb, welcher mittels Antriebsrad 27, Riemen 28 und Riemenscheibe 29 die Drehbewegung gleichsinnig auf die Vorgelegewelle 30 überträgt. Übersetzungsräder 31 und 32 übertragen diese Drehbewegung auf die Transportspindel 33, auf welcher auch der Schreibelektrodenhalter 34 in das Spindelgewinde 35 eingreifend gelagert und durch den Gewindeeingriffsarm 36 mitgenommen wird.

Der Gewindeeingriffsarm ist vorgespannt gegenüber der Transportspindel 33 angefedert, wodurch eine Friktionsmitnahme in Drehrichtung der Transportspindel 33 wirkt, damit sich die am Hebel 37 eingesetzte Schreibelektrode 38 mit durch die Friktion bewirkter Kraft an die Guthabenkarte 19 anlegt. Die

- 6 -

auf der Vorgelegewelle 30 befestigte Schnecke 39 greift in das Schneckenrad 40 ein, welches einstückig mit der Nabe 41 als Träger für den Kontaktschleifer 42 dient und über die starre Antriebsverbindungen einen synchronisierten Ablauf sichert. Der Kontaktschleifer 42 überfährt mit dem inneren Kontakt 43 die auf der gedruckten Schaltungsplatte 23 aufgebrachte kreisförmige Kontaktbahn 44, die mittels Leiterbahn 45 und Steckkontakt 46 mit der Steuerung 25 verbunden, als Gegenpol dient. Die weitere Kontaktbahn 47 ist im Bereich des äußeren Kontakt 48 segmentartig gestaltet, wobei die Teilung 49 exakt der Teilung im Guthabenbereich 5 entspricht und mit der Zuleitung 50 verbunden ist.

Wird nun von der Steuerung 25 die Abbuchung einer oder mehrerer Werteinheiten freigegeben, überfährt die Schreibelektrode 38 den Guthabenbereich 5 bis bei erreichtem Restguthabenbeginn 5a dieser weiter abgebrannt wird, wobei der dabei auftretende Schreibstrom in der Steuerung 25 bewirkt, daß diese Abbuchung bewertet und die betreffende Ware oder Dienstleistung freigegeben wird. Ist nun beispielsweise nur eine Werteinheit abzubuchen, wird durch den das entsprechende Kontaktbahnsegment 51 verlassenden Außenkontakt 48 des Kontaktschleifers 42 der Schreibstrom unterbrochen und damit der Abbuchvorgang beendet. Diese Unterbrechung des Schreibstroms bewirkt danach in der Steuerung 25 die Antriebsrichtung umzuschalten, wonach die Schreibelektrode 38 dann in die Ausgangsstellung zurückgeführt wird. Durch das Hilfskontaktsegment 52, dessen Zuleitung 53 und Steckkontakt 54 mit der Steuerung 25 verbunden, schaltet der Motor 26 bei erreichter Ausgangsstellung ab und ist damit in Bereitschaft für einen nächsten Abbuchvorgang. Bei umgekehrter Drehrichtung hebt .infolge der Friktion mit der Transportspindel 33 die in Hebel 37 eingesetzte Schreibelektrode 38 ab, bis die Nase 54 sich an der Anschlagleiste 55 anlegt, wie dies in Fig. 6 angedeutet ist.

Ein weiteres Kontaktsegment 56 mittels Zuleitung 57 und Steckkontakt 58 mit der Steuerung 25 verbunden, begrenzt die Bewegung der Schreibelektrode 38 in Vor - laufrichtung um bei vollständig abgebuchten Guthabenbereich auch auf Rücklauf umzuschalten. Beim letzten Abbuchvorgang am Guthabenbereich 5 wird mit dem Abbrennen der letzten Werteinheit gleichzeitig die Leitungsverbindung 58 zwischen von der metallisierten Basisfläche 1 zum Guthabenbereich 5 und zum Kodierbereich 4 durchtrennt, wodurch die Guthabenkarte auch im Kodierbereich unwirksam wird. Um diese Leitungsverbindung 58 sicher durchzutrennen, ist das betreffende Kontaktsegment 59 breiter ausgebildet.

Die weiteren in Figur 3 sichtbaren Anschlüsse 60 bis 63 mit Lötpunkten 64 bis 67 der Anschlußverbindung von Schreibelektrode 38 und des Motors 26 zur Steuerung 25, wobei insbesonders die Anschlußverbindung zwischen dem Lötstützpunkt und der hin- und herbewegten Schreibelektrode 38 aus hochflexibler Litze 68 an der Leitungshalterung 69 befestigt ist. In an sich bekannter Weise und hier nicht näher dargestellten Steuerung 25

- 8 -

erfolgt die Auswertung der Signale, die Programmierung des folgerichtigen Ablaufs, die Versorgung des
Motors und der Schreibelektrode.

In Weiterbildung des Erfindungsgedankens ist die Form
des Guthabenbereichs nicht auf eine gerade Zunge beschränkt, wie in dem beschriebenen Beispiel dargestellt.
In Figur 7 zeigt beispielsweise eine weitere Alternative, wobei mehrere schräg zueinander und elektrisch
durchgehendem Guthabenbereich 70 hier 100 Werteinheiten bilden. In dieser Anordnung wirken unter Anwendung
des gleichen Funktionsprinzip mehrere als Kamm ausgebildete Schreibelektroden während dem manuellen Herausziehen der Guthabenkarte nach Figur 7 entwertend durch
Abbrennen von Werteinheiten.

Auch in dieser Ausführung ist durch die Steuerung 25
sichergestellt, daß bei den im rechten Winkel zur Bewegungsrichtung angeordneten, beispielsweise 20
Schreibelektroden, und schräge angeordneten Guthabenbereich 70 immer nur die zuerst berührte Werteinheit
allein abgebrannt wird.

Schließlich sei noch auf die Möglichkeit einer nicht
dargestellten kreis- oder spiralförmigen Ausbildung
des Guthabenbereichs hingewiesen, welcher in gleicher Weise, mittels kreis- oder spiralförmig geführten Schreibelektrode abschnittweise abgebucht wird.

- 9 -

Die Figur 8 und 9 zeigt nun eine schematische Ausführungsform für ein Erstellungsgerät zur Herstellung von Guthabenkarten, wobei metallbeschichteter Karton 71 als Bandmaterial durch die Führung 72 eingeführt und mittels Transportwalzen 73 abschnittweise transportiert wird. Der Führung 72 sind kammartige Schreibelektroden 74 zugeordnet, welche aus einer nicht dargestellten Steuerung mit Schreibstrom versorgt, alle Längsauftrennungen 75 ausbrennen. In der in Figur 8 gezeigten Position stoppt das Bandmaterial 71 mit bereits eingebrannten Längsauftrennungen 75 um mittels dem Elektrodenkamm 77 die Querauftrennungen 78 vorzunehmen.

Die Elektrodenkamm-Halterung 79 ist dazu querverschieblich auf Führungsbolzen 80 gelagert, welche in den Aufbauten 81, 82 befestigt sind. Der Schreibstrom dieser Schreibelektroden 77 liefert eine an sich bekannte und hier nicht näher erläuterte Steuerung, wobei sichergestellt ist, daß die gewünschte Kodierung und alle Querauftrennungen positionsgenau erfolgt.

In weiteren, nicht dargestellten Arbeitsgängen werden danach die Guthabenkarten mit Code-Überdeckung, Hinweisen und Firmen- oder Werbetexten bedruckt und dann geschnitten.

Die Figur 10 zeigt schließlich noch den zeitlichen Funktionsablauf der Abbuchung bis zum Wert 16, wobei der Guthabenbereich 5, wie in Figur 2 auch dargestellt,

- 10 -

bis auf einen Restwert von 16 Werteinheiten 5a entwertet ist. Die zur weiteren Entwertung eingesteckte und codegeprüfte Guthabenkarte 19 startet den Motor 26 im Vorlauf. Bei Berührung zwischen Schreibelektrode 38 mit dem Guthabenbereich 5a fließt ein Schreibstrom 83 von etwa 150 mA, welcher in der Steuerung 25 als Freigabesignal 84 verwertet wird. Wie in Figur 3 beschrieben, schaltet der das Kontaktsegment 51 verlassenden Schleifkontakt 48 die Schreibspannung 85 ab, woraus die Steuerung 25 erkennt, daß die Abbuchung abgeschlossen ist. Aus der Steuerung 25 erfolgt danach auch die Drehrichtungsumschaltung am Motor 26 auf Rücklauf 86, welcher bei erreichter Endstellung durch das Kontaktsegment 52 gesteuert abschaltet 87. Wie im Zeitstrahl 88 ersichtlich, ist die Abbuchungszeit abhängig vom Guthabenstand und bei der letzten Werteinheit mit ca. 2 sec. am größten.

- 11 -

Patentansprüche:

1. Einrichtung zur Abbuchung bei Guthabenkarten mit metallisierter Oberfläche zur Elektrosensitiv-Beschriftung, dadurch gekennzeichnet, daß dieselbe im elektrosensitiven Schreibverfahren in elektrisch leitende und nichtleitende Flächenbereiche aufgeteilt ist und einerseits einen Codierbereich, insbesondere im Randteil und andererseits einen Guthabenbereich im Grundkontaktfeld zur schrittweisen, sichtbaren Abbuchung durch elektrosensitive Einwirkung aufweist.

2. Einrichtung nach Anspruch 1, gekennzeichnet durch ein Elektrosensitiv-Schreibgerät zur Erstellung der Guthabenkarte mit Grundcodierung im Randteil und Guthabenbereich im weiteren Kartenteil zur elektrosensitiven Abbuchung.

3. Einrichtung nach Anspruch 1, gekennzeichnet durch ein Elektrosensitiv-Entwertungsgerät mit Kontaktanordnung zur Erkennung der Codierung im Randteil mit Auswertung und Freigabe und abhängig von einer Benutzung entsprechenden elektrosensitiven Entwertung im Guthabenbereich der Guthabenkarten.

4. Einrichtung nach Anspruch 1, dadurch gekennzeichnet, daß die Codierung im Randteil durch getrennte Kontaktfeder gebildet ist, welche durch elektrosensi-

- 12 -

tive Einwirkung vom Grundkontaktfeld
elektrisch trennbar sind, wodurch eine elektrisch
lesbare Codierung in beliebiger Reihenfolge entsteht.

5. Einrichtung nach Anspruch 4, dadurch gekennzeichnet, daß beim Aufdruck wie Firmennamen, Bedienungsanweisung, Beschriftung des Guthabenbereichs u.a.
auf der Guthabenkarte gleichzeitig die Kodiertrennstellen zum Schutz gegen Erkennung überdruckbar
sind.

6. Einrichtung nach einem der vorhergehenden Ansprüche 1 bis 5, dadurch gekennzeichnet, daß das Guthabenfeld der Guthabenkarte insbesondere dreiseitig im elektrosensitiven Schreibverfahren zungenartig vom Grundkontaktfeld getrennt und zur Abbuchung abschnittweise entwertbar ist, indem das
zungenartige Guthabenfeld elektrosensitiv abtrennbar ist, wobei vorzugsweise je ein Abschnitt einer
Werteinheit entspricht.

7. Einrichtung nach Anspruch 6, dadurch gekennzeichnet, daß der gesamte Guthabenbereich durch Aufdruck
in Abschnitte jeweils zugeordneter Werteinheit
entsprechend aufgeteilt ist und damit die bereits
verbrauchten sowie die noch vorhandenen Werteinheiten am Ende des elektrosensitiv abgetrennten
Bereichs ablesbar sind.

8. Einrichtung nach einem der vorhergehenden Ansprüche 1 bis 5, dadurch gekennzeichnet, daß das Guthabenfeld aus mehreren schräg zueinander verlaufenden und elektrisch leitend verbundenen Einzelabschnitten besteht, die bei quer zur Bewegungsrichtung angeordnetem Elektrodenkamm und herausgezogener Guthabenkarte abschnittweise und für den Benutzer sichtbar zu entwerten ist.

9. Einrichtung nach einem der vorhergehenden Ansprüche 1 bis 5, dadurch gekennzeichnet, daß das Guthabenfeld eine Kreis- oder Spiralform aufweist, welches mittels einer kreis- oder spiralförmig geführten Schreibelektrodenanordnung diese abschnittweise und für den Benutzer sichtbar elektrosensitiv entwertbar ist.

10. Einrichtung nach einem der vorhergehenden Ansprüche, dadurch gekennzeichnet, daß die elektrosensitive, abschnittweise Abbuchung in Richtung Wertgrenze solange erfolgt, bis das Guthaben erschöpft und bei Entwertung der letzten Werteinheit die elektrische Verbindung zwischen Metallisierung und Elektrode und den damit unterbrochenen Schreibstrom das Signal der vollständigen Entwertung entnommen wird, welches gleichzeitig damit auch die Zuleitung zur Codierung unterbricht.

11. Einrichtung nach einem der vorhergehenden Ansprüche, dadurch gekennzeichnet, daß die Guthabenkarte Codier- und Guthabenbereich zur Erhöhung der Kapazität mehrfach enthält und hierfür gegebenenfalls eine doppelseitige Metallisierung aufweist.

12. Einrichtung mit Elektrosensitiv-Schreibgerät nach
Anspruch 2, dadurch gekennzeichnet, daß dieses
Elektrodenanordnungen aufweist, welche in Verbindung mit einer Ansteuerung gekoppelt mit dem
Vorschubantrieb die Schreibstromzuführung an die
Elektroden zur Herstellung der Kontaktfeder für
die Codierung am Randteil und die Aufteilung des
Guthabenbereichs geben.

13. Einrichtung nach Anspruch 12, dadurch gekennzeichnet, daß die Längs- und Querlinien durch je einen
getrennten Elektrodenkamm erzeugbar sind, wobei
die Längslinien bei stehendem Kamm- und laufenden
Kartenband und die Querlinien bei querbewegtem
Kamm und stehendem Kartenband einbrennbar sind.

14. Einrichtung nach Anspruch 13, dadurch gekennzeichnet, daß bei querbewegbarem Elektrodenkamm und
stehendem Kartenband die Codierfelder entsprechend
der gewünschten Codierung von einer Codierlogikschaltung wählbar gesteuert elektrosensitiv abtrennen.

15. Einrichtung nach Anspruch 14, dadurch gekennzeichnet, daß das Kartenband nach dem Codieren und Aufbringen des Guthabenbereichs bedruckt und sodann
in Karten abtrennbar ist.

- 15 -

16. Einrichtung mit Elektrosensitiv-Entwertungsgerät nach Anspruch 3, dadurch gekennzeichnet, daß neben der mehrpoligen Kontaktanordnung zur elektrischen Erkennung der Codierung im Randteil der Guthabenkarte eine Schreibelektroden-Anordnung vorgesehen ist, welche von der Ausgangs-Position aus den Guthabenbereich überfährt und bei beginnender Metallisierung mit Abtrennen beginnt sowie entsprechend der Vorwahl zur Steuerung des Schreibstroms nach einem oder mehreren Werteinheiten endet und in Ausgangsstellung zurückfährt.

17. Einrichtung nach Anspruch 16, dadurch gekennzeichnet, daß die Schreibelektrode motorisch, insbesondere vermittels Transportspindel bewegbar ist, wobei durch Reibmitnahme in Schreibrichtung die Schreibelektrode der Guthabenkarte anlegbar und bei Rückführung zur Ausgangsposition bei umgekehrter Drehrichtung gegen einen Anschlag abhebbar ist.

18. Einrichtung nach Anspruch 17, dadurch gekennzeichnet, daß in Getriebeverbindung mit dem Spindelantrieb ein Schleifer einen Kontaktkreis überfährt, dessen Kontaktsegmente entsprechend der Werteinheitenteilung der Guthabenkarte gegliedert und während dem Überfahren eines Segments mittels Steuerung die Schreibspannung der Schreibelektrode nach Abbuchen der Werteinheit(en) abschaltet.

- 16 -

19. Einrichtung nach Anspruch 18, dadurch gekennzeichnet, daß der Kontaktkreis einen weiteren Schleifkreis als Gegenpol für den Schleifer sowie Hilfskontakt mit Anschlüssen der zugehörigen Motor- und Schreibelektroden-Steuerung besitzt.

20. Einrichtung nach einem der Ansprüche 16 bis 19, dadurch gekennzeichnet, daß bei Einschaltung des Entwertegeräts durch Einstecken der Guthabenkarte deren Codierung geprüft und bei richtiger Codierung der Schreibelektrodenantrieb und bei Berührung der unter Spannung stehenden Schreibelektrode mit Guthabenzunge einen Schreibstromimpuls erzeugt wird, welcher über einen Verstärker auslöst und nach Abtrennen einer Werteinheit an der Guthabenzunge der Schleifkontakt das zugehörige Schreibsegment im Kontaktkreis verläßt und die Schreibspannung unterbricht.

21. Einrichtung nach einem der Ansprüche 16 bis 20, dadurch gekennzeichnet, daß weitere Schaltungsteile bei unterbrochener Schreibspannung den Antrieb auf Rücklauf umschalten, so daß die Schreibelektrode in Ausgangsstellung zurückkehrt und mittels Hilfskontakt im Kontaktkreis den Antrieb abschaltet.

22. Einrichtung nach einem der Ansprüche 16 bis 21, dadurch gekennzeichnet, daß mittels einem vorwählbaren Zähler in der Steuerung des Entwertegeräts mehrerer Entnahmen nacheinander steuerbar sind solange noch Guthaben auf der Karte vorhanden ist.

23. Einrichtung nach einem der Ansprüche 16 bis 22, dadurch gekennzeichnet, daß eine zusätzliche Digitalanzeige am Entwertungsgerät den Guthabenrest der Karte anzeigt.

# Fig.1

# Fig.2

**Fig.3**

# Fig. 4

(Fig.3)

**Fig.5**

26 28 29 30 31 32

III ← ‖ III →

69 39 33

35 34

16

20 18 20 23

**Fig.6a**

68 69
38 36
34

**Fig.6**

**Fig.6b**

76 55
37
38 36
35 34

VIa

Fig: 7

## _Fig. 9_

## _Fig. 8_

## Funktionsablauf „Abbuchen Wert 16"

Abbuchen der letzten Werteinheit; S~40mm; T~2sec (o.Rücklauf)

**88**

**87** Motor aus

bei Überlauten von Ⓔ Motor umpolen nach Ⓐ

ca.1mm

Rücklauf

**86**

Guthabenkarte auf Gültigkeit prüfen und bei Erkennung, Abbuchung einleiten

Vorlauf

Ⓔ

$T_1$

Freigabesignal für Warenentnahme

**84**

Motor ein

**26**

ca.150 mA

Schreibstrom

0

**83**

~ 100 ms

~ 50 ms

Ⓐ

Schreibspannung +30 VDC

**86**

Schreibspannung abschalten

**Fig.10**

**19**

20          15          10          5

Entwertungsgerät für Guthabenkarten aus MP Papier